# EUROPEAN PATENT APPLICATION

(11) **EP 2 672 364 A2**
(43) Date of publication of application: **11.12.2013**
(21) Application number: 13170244.1
(22) Date of filing: 03.06.2013
(51) Int. Cl.: G06F 3/01, G06F 3/0481

(54) **Method and apparatus for providing graphical user interface**

(30) Priority: 04.06.2012 KR 20120059793
(71) Applicant: Samsung Electronics Co., Ltd, Gyeonggi-do 443-742 (KR)
(72) Inventor: Kang, Hwa-Young, 443-742 Gyeonggi-do (KR); Yu, Young-Sam, 443-742 Gyeonggi-do (KR); Chang, Eun-Soo, 443-742 Gyeonggi-do (KR)
(74) Representative: Jenkins, Richard Gavin

(57) **Abstract**

A method of providing a Graphical User Interface (GUI) and a display device employing the same are provided. The method includes generating a three-dimensional (3D) GUI configured to display respective menus on a base face and at least one side face bordering the base face; displaying a menu of the base face on a screen; and upon detection of a user's movement through vision recognition with the menu of the base face being displayed, displaying at least one face that corresponds to a direction of the user's movement and displaying data on the at least one face.

## Description

### BACKGROUND OF THE INVENTION

### 1. Field of the Invention

The present invention relates generally to a method and apparatus for providing a graphical user interface and more particularly, to a method and apparatus for providing a graphical user interface by displaying a menu based on motion detection.

### 2. Description of the Related Art

Recently, mobile devices equipped with displays have been continuously developed, and now have various functions. For example, a hybrid multimedia device having each of an MP3 player, camera, and cell phone functions has become mainstream. Such diversification of functions of the display device has led to the development of a Graphical User Interface (GUI) to provide a user with an easy-to-use interface. Among others, development of sensors for detecting different types of user manipulation enables the user to be able to input desired commands in various ways. For example, with a touch screen of the display device, the user can input a desired command by touching the touch screen. Also, with a motion sensor, the user can input a desired command by entering a certain motion into the display device.

As functions of the display device become diversified and full touch screen products become common, a GUI provided as graphics on the screen is being further developed, instead of existing button-based user interfaces (UIs). Therefore, ways of providing a GUI that enables the user to more easily use menus for functions of the display device are required.

### SUMMARY OF THE INVENTION

The present invention has been made to address at least the problems and disadvantages described above and to provide at least the advantages described below. Accordingly, an aspect of the present invention provides a solution to the foregoing issue.

In accordance with an aspect of the present invention, there is provided a method of providing a Graphical User Interface (GUI) in a digital device, which includes generating a three-dimensional (3D) GUI configured to display respective menus on a base face and at least one side face bordering the base face; displaying a menu of the base face on a screen; and upon detection of a user's movement through vision recognition with the menu of the base face being displayed, displaying at least one face that corresponds to a direction of the user's movement and displaying data on the at least one face.

In accordance with another aspect of the present invention, there is provided an apparatus for providing a Graphical User Interface (GUI) of a digital device, which includes a display unit; a vision recognition processor for detecting a user movement from vision recognition data captured with an image sensor; a GUI generator for generating a three-dimensional (3D) GUI configured to display respective menus on a base face and at least one side face bordering the base face; and a controller for displaying a menu of the base face on a screen of the display unit, and upon detection of a user's movement through the vision recognition processor with the menu of the base face being displayed, displaying at least one face that corresponds to a direction of the user's movement and displaying data on the at least one face.

### BRIEF DESCRIPTION OF THE DRAWINGS

The above and other aspects, features and advantages of the present invention will become more apparent by describing in detail embodiments thereof with reference to the attached drawings in which:
FIG. 1 is a block diagram of a portable device, according to an embodiment of the present invention;
FIG. 2 is a block diagram of a digital signal converter, according to an embodiment of the present invention;
FIG. 3 shows a structure of an image sensor, according to an embodiment of the present invention;
FIG. 4 is a flowchart of a method of providing a three-dimensional (3D) GUI, according to an embodiment of the present invention;
FIGs. 5 to 7 show a procedure of displaying a menu on a left face;
FIG. 8 is a structure of the 3D GUI, according to an embodiment of the present invention;
FIG. 9 shows a cell phone having a vision recognition GUI mode start button, according to an embodiment of the present invention;
FIGs. 10 to 12 are diagrams displaying menus on base, left, and both left and top faces, according to an embodiment of the present invention;
FIGs. 13 to 16 show a procedure of selecting an item displayed on a base face, which is performed by a user, according to an embodiment of the present invention; and
FIGs. 17 to 20 show a procedure of selecting an item of a menu displayed on the left face, according to an embodiment of the present invention.

### DETAILED DESCRIPTION OF EMBODIMENTS OF THE PRESENT

### INVENTION

Reference will now be made in detail to embodiments, examples of which are illustrated in the accompanying drawings, wherein like reference numerals refer to the like elements throughout. In the description of the present invention, if it is determined that a detailed description of commonly-used technologies or structures related to the invention may unnecessarily obscure the subject matter of the invention, the detailed description will be omitted.

The present invention may be incorporated in digital devices, such as cell phones, televisions, personal computers, laptop computers, digital sound players, portable multimedia player (PMP), or the like, to ensure the extraction of vision recognition information from an image of a digital camera and perform information inputting, recognition of situations, etc. between a user and the digital device.

The present invention provides a method of providing a GUI and a display device employing the method. According to an embodiment of the present invention, while a menu of a base face in a three-dimensional (3D) GUI is displayed, the display device recognizes a user's face, and upon detection of rotation of the user's face displays at least one of side face and corresponding data based on a direction of the user's manipulation. Thus, the user may more easily and conveniently select a desired menu.

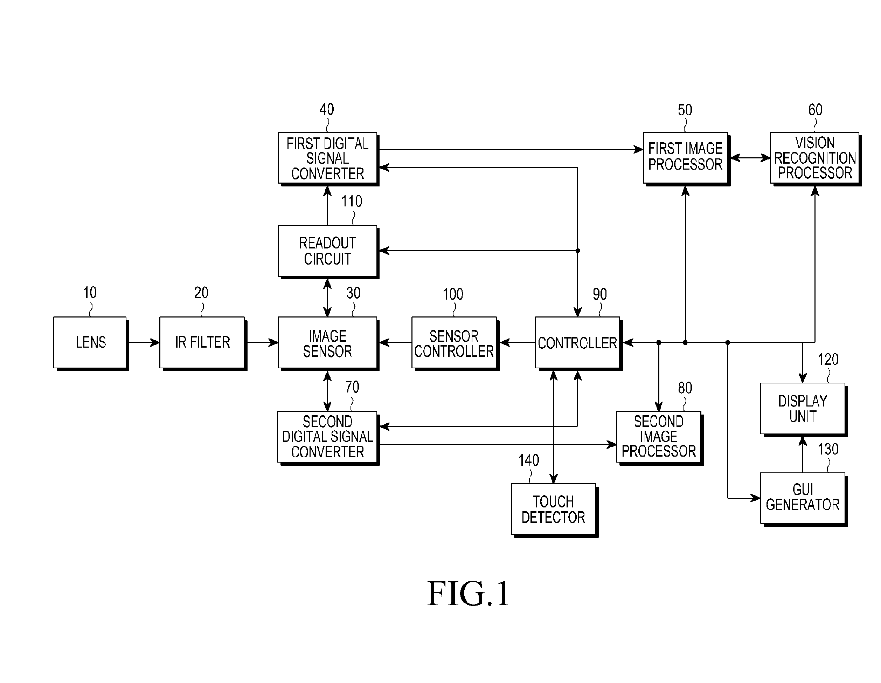

FIG. 1 is a block diagram of a digital device according to an embodiment of the present invention. Referring to FIG. 1, the digital device includes a lens 10 contained in a camera unit of the digital device, an infrared ray (IR) filter 20, an image sensor 30, a first digital signal converter 40, a second digital signal converter 70, a first image processor 50, a second image processor 80, a vision recognition processor 60, a sensor controller 100, and a readout circuit 110. The digital device further includes a controller 90, a display unit 120, a GUI generator 130, a touch sensing unit 140, and a memory (not shown). The digital device may be e.g., a cell phone, a television, a personal computer, a laptop, a digital sound player, a PMP, etc.

The readout circuit 110, the first digital signal converter 40, the first image processor 50, and the vision recognition processor 60 constitute a structure of generating recognition image data and perform vision recognition using the recognition image data. The second digital signal converter 70 and the second image processor 80 constitute a structure of generating capture image data.

The IR filter 20 is a filter for blocking out infrared rays from light input through the lens 10.

The controller 90 controls general operations of the digital device, and in an embodiment of the present invention sets up one of a capture mode and a vision recognition mode for the camera unit. Based on the setup mode, the controller 90 controls operations of the sensor controller 100, the image sensor 30, the first digital signal converter 40, the second digital signal converter 70, the first image processor 50, the second image processor 80, and the vision recognition processor 60.

The capture mode is an operating mode of creating general still images like snapshots and videos by using each component included in the camera unit and may be subdivided into still image capture, preview, video capture mode, or the like.

The vision recognition mode is an operating mode for detecting and recognizing a particular object or a movement of the particular object from the generated recognition image data and performing a designated particular action to the recognized result. Functions related to the vision recognition mode include e.g., vision recognition, augmented reality, face recognition, movement recognition, screen change detection, user interfacing and the like. Specifically, in the vision recognition mode, the digital device may detect a hand movement and perform a particular action that corresponds to the detected hand movement.

The controller 90 controls each component therein to separately provide a conventional GUI and a 3D GUI in the digital device, according to an embodiment of the present invention. The conventional GUI provides different display information of the digital device in a two-dimensional (2D) plane. The 3D GUI provides the different display information of the digital device in a stereoscopic view under the vision recognition GUI mode. In other words, a user movement is recognized through the vision recognition, and different display information of the digital device is provided onto the stereoscopic 3D GUI based on the recognized user movement. For example, the digital device performs face recognition based on recognition image data in which the face is captured according to an embodiment of the present invention, recognizes a rotational direction of the face, and displays the 3D GUI corresponding to the rotational direction.

The sensor controller 100 changes settings of operational parameters of the image sensor 30 and controls corresponding image sensor pixels under control of the controller 90 based on the operating mode. The operational parameters are values to determine resolution, exposure time, gain, frame rate, etc. of the image data generated from actual photographing.

In the capture mode, many different operation parameter values are determined to generate snapshot data, preview image data or video data having a particular resolution in a particular size, and the sensor controller 100 sets up the determined operational parameter values for the image sensor 30. The sensor controller 100 also selects and activates image sensor pixels to be used in the image sensor 30 based on the resolution of capture image data to be generated.

The controller 90 controls the second digital signal converter 70 and the second image processor 80 to generate the capture image data.

In the vision recognition mode, the operational parameter values are determined based on the format of the recognition image data specific to the vision recognition process. In other words, each operational parameter value is determined according to the resolution and frame rate of the recognition image data to be secured for the vision recognition process, and the sensor controller 100 sets up the operational parameter for the image sensor 30 to have a value determined in the vision recognition mode. The sensor controller 100 activates vision pixels in the image sensor 30. In this regard, the sensor controller 100 operates in a low power mode.

The controller 90 controls the readout circuit 110, the first digital signal converter 40 and the first image processor 50 to generate the recognition image data. The image sensor 30 is an element for outputting light at a voltage level as high as possible to be processed, when the light entering into a photo conductor via a color filter changes electron-hole pairs generated in the photo conductor. The image sensors may be categorized by type into Charge Coupled Device (CCD) image sensors and Complementary Metal Oxide Semiconductor (CMOS) image sensors.

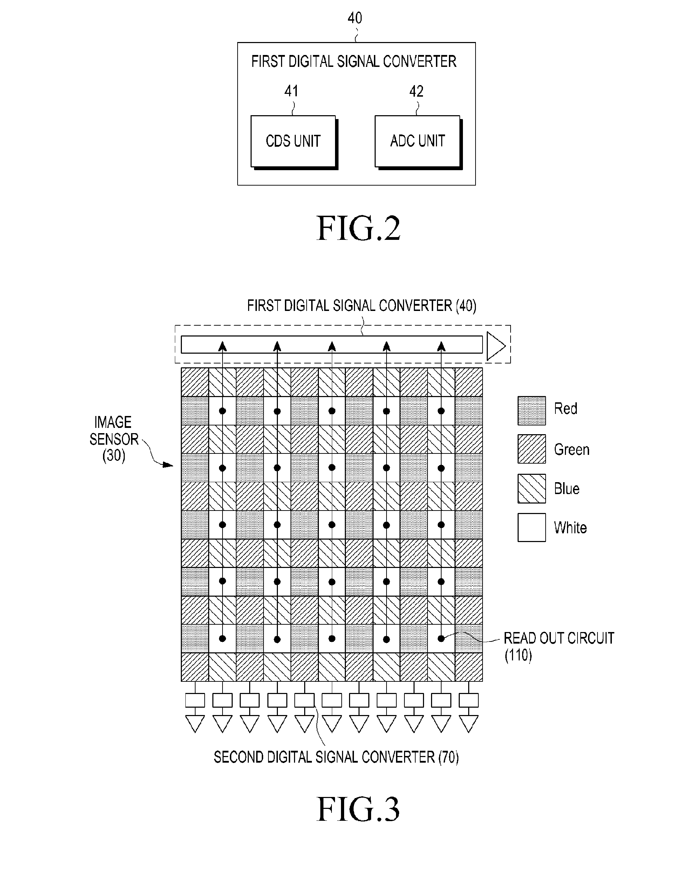

The image sensor 30 is implemented as an image sensor array in which a number of image sensor pixels are arranged in rows and columns to obtain a certain standard image. The image sensor 30 includes color filters in a Bayer pattern that implement light input through the lens 10 as original natural colors, and FIG. 3 shows the image sensor 30 viewed from the top. The Bayer pattern, since its release in the 1970s, is the most important theory that begins with a fact that contrary to real images in the physical world, which do not consist of dots (pixels), digital images have to be implemented as pixels. To generate an image consisting of pixels by gathering brightness and colors of an object, filters for accepting respective red (R), green (G), and blue (B) colors are arranged in a 2D plane, which are called Bayer pattern color filters. Each of the pixels forming a lattice network under the Bayer pattern color filters does not recognize full natural colors but only a designated color among RGB colors, which is interpolated later to infer the natural color.

Signals output from the plurality of pixels that constitute the image sensor 30 are configured to be input to the second digital signal converter 70. Analog signals having information of the light input to the second digital signal converter 70 are converted into digital signals, which are then output to the second image processor 80. The second image processor 80 performs signal processing on them to generate capture image data.

Some of the plurality of pixels are designated as vision pixels, according to the present invention. The vision pixels are used in generating image data to be used for vision recognition, and signals output from the vision pixels are configured to be input not only to the second digital signal converter 70 but also to the first digital signal converter 40 through the readout circuit 110. The number of pixels designated as vision pixels is greater than the least number with which to be able to generate the recognition image data for normal vision recognition.

The readout circuit 110 is connected to each of the vision pixels, and the output signal from the read out circuit 110 is input to the first digital signal converter 40.

Basically, any pixel among the plurality of pixels constituting the image sensor 30 may be used as the vision pixel. Since the recognition image data used in the vision recognition process is used for detecting and recognizing a particular object included in the image data, the recognition image data need not be represented in original natural colors but be generated to facilitate the detection and recognition of the object. Thus, it is more efficient for vision pixels to be configured to have a high sensitivity property in a lower light condition.

As an example, vision pixels may be configured only with green pixels having a relatively high sensitivity property among the RGB pixels.

In another example, vision pixels may be configured with white pixels, which are high sensitivity pixels. The white pixels may be implemented by removing color filters of corresponding pixels from the Bayer pattern. In this case, pixel interpolation is conducted not to have the light information obtained from the white pixels working as defects in generating the capture image data, allowing the light information obtained from vision pixels to be used even for the capture image data.

Since a noise property of the white pixel is superior to that of the green pixel, using the white pixel for the vision pixel rather than the green pixel may cause relatively better sensitivity in a lower light condition.

As such, by designating particular color pixels having a relatively high sensitivity property as vision pixels in the image sensor that consists of different color pixels, vision recognition may be performed with a single-colored recognition image data in the embodiment of the present invention.

Otherwise, respective R, G, B pixels may be used as long as two pixel values are used as one pixel value.

FIG. 3 illustrates the image sensor array of the image sensor 30 in the case of using white pixels for vision pixels. Referring to FIG. 3, the image sensor array consists of red, green, blue, and white pixels, whose output values are configured to be input to the second digital signal converter 70. Output values of the white pixels are also configured to be input to the first digital signal converter 40 through the readout circuit 110. The readout circuit 110 represented in solid lines is shown in a simplified form to provide better understanding.

The first and second digital signal converters 40 and 70 each convert analog signals input from pixels of the image sensor 30 into digital signals.

The first digital signal converter 40 converts the analog signals input from the vision pixels into digital signals to generate the recognition image data and outputs the digital signals to the first image processor 50. The second digital signal converter 70 converts the analog signals input from the entire pixels of the image sensor 30 into digital signals to generate the captured image data and outputs the digital signals to the second image processor 80.

The number of output bits of the first digital signal converter 40 is determined to be optimized vision recognition, and since the number of pixels input to the first digital signal converter 40 is less than that of the second digital signal converter 70, the first digital signal converter 40 has less output bits than those of the second digital signal converter 70. Thus, the first digital converter 40 consumes less power than the second digital signal converter 70.

The image sensor 30 can be a CCD image sensor or a CMOS image sensor. If the image sensor 30 is a CMOS image sensor, the first and second digital signal converters 40 and 70 each include a Correlated Double Sampling (CDS) unit, which is shown in FIG. 2.

FIG. 2 shows a block diagram of the first digital signal converter 40 in the case where the image sensor 30 is a CMOS image sensor. Referring to FIG. 2, the first digital signal converter 40 includes a CDS unit 41 and an analog to digital converter (ADC) 42.

In the case where the image sensor 30 is a CMOS image sensor, the image sensor array has a plurality of pixels arranged in a 2D matrix and each of the plurality of pixels outputs a reset signal or a detection signal based on a selection signal to select a corresponding pixel. Thus, upon receiving the reset or detection signals from the vision pixels, the CDS unit 41 generates analog image signals by doing correlated-double sampling and outputs the analog image signals to the ADC 42. The ADC 42 converts the input analog image signals into digital image signals and outputs the digital image signals to the first image processor 50.

In the case where the image sensor 30 is a CMOS image sensor, the second digital signal converter 70 may also be configured similarly to the first digital signal converter 40, except that while the CDS unit 41 included in the first digital signal converter 40 is configured to sample signals output only from the vision pixels, the CDS unit included in the second digital signal converter 70 is configured to sample signals output from the entire pixels of the image sensor 30.

Thus, the CDS unit 41 included in the first digital signal converter 40 may consume less power than the CDS unit included in the second digital signal converter 70.

The first image processor generates a recognition image in a recognition image format by processing the digital signal input from the first digital signal converter 40 and outputs the recognition image to the vision recognition processor 60.

The vision recognition processor 60 performs various recognition functions using the recognition image data. Specifically, the vision recognition processor 60 detects and recognizes a particular object or a movement of the particular object from the recognition image data, and cooperates with the controller 90 to perform a designated operation to the recognized result. Especially, the vision recognition processor 60 performs face recognition in a vision recognition GUI mode for displaying a 3D GUI, and extracts up, down, left, or right face movement and forwards it to the controller 90.

The second image processor 80 generates a capture image data in a corresponding capture image format by processing the digital signal input from the second digital signal converter 70 and stores the capture image data in a memory (not shown). For example, the second image processor 80 may generate still image data, preview image data, video data, etc.

The GUI generator 130 generates a GUI for receiving user instructions under control of the controller 90. The GUI generator 130 generates a 2D GUI in a plane in a normal GUI mode while generating a 3D GUI in which a base face and at least one side face bordered with corners of the base face having respective menus or information thereon are displayed in the vision recognition GUI mode. Specifically, the GUI generator 130 generates the 3D GUI implemented by using 5 faces of a rectangular parallelepiped. Here, the 3D GUI is configured to have menus or data displayed on the base face and four faces bordered with four corners of the base face, i.e., top, bottom, left and right faces, with one face of the rectangular parallelepiped being designated as the base face. The base face is a floor face of the rectangular parallelepiped having the same size as the screen size of the digital device. Otherwise, the base face corresponds to an area in which the general 2D GUI menu is displayed. On the top, bottom, left and right faces, a top menu or a sub menu of the menu displayed on the base face may be displayed. In another example, shortcut icons for functions provided by the digital device or various applications equipped in the digital device may be displayed. Notification messages or received messages related to the functions provided by the digital device or various applications equipped in the digital device may also be displayed. A screen to be shown during activation of a particular application may also appear therein. Control menus related to playing a music file, e.g., play, next file selection, previous file selection, definition icons, or the like may also be displayed.

As such, the GUI generator 130 generates the 3D GUI having menus displayed on the base and side faces of the rectangular parallelepiped, and displays the 3D GUI on the display unit 120 under control of the controller 90.

The touch detector 140 detects the user's touch manipulation. Specifically, the touch detector 140 may be implemented in the form of a touch screen that detects user's touch manipulation over the display screen. The touch detector 140 also sends information of the detected user's touch manipulation to the controller 90.

Programs for performing various functions of the digital device are stored in the memory. The memory may be implemented with a hard disc, nonvolatile memory, etc.

The display unit 120 displays an image to provide functions of the digital device. The display unit 120 also displays GUIs on the screen for user's manipulation. Specifically, the display unit 120 displays the 3D GUI having menus displayed on the base and side faces of the rectangular parallelepiped generated by the GUI generator 130, according to the user's manipulation.

The controller 90 controls general operations of the digital device. With the user's manipulation over the base face having the menu displayed in the vision recognition GUI mode, the controller 90 controls to have menus of at least one face corresponding to a direction of the user's manipulation displayed in the screen. Specifically, upon detection of a user's motion over the base face having menus displayed, the controller 90 controls to display menus of at least one face among top, bottom, left and right faces that corresponds to a direction of the user's motion in the screen.

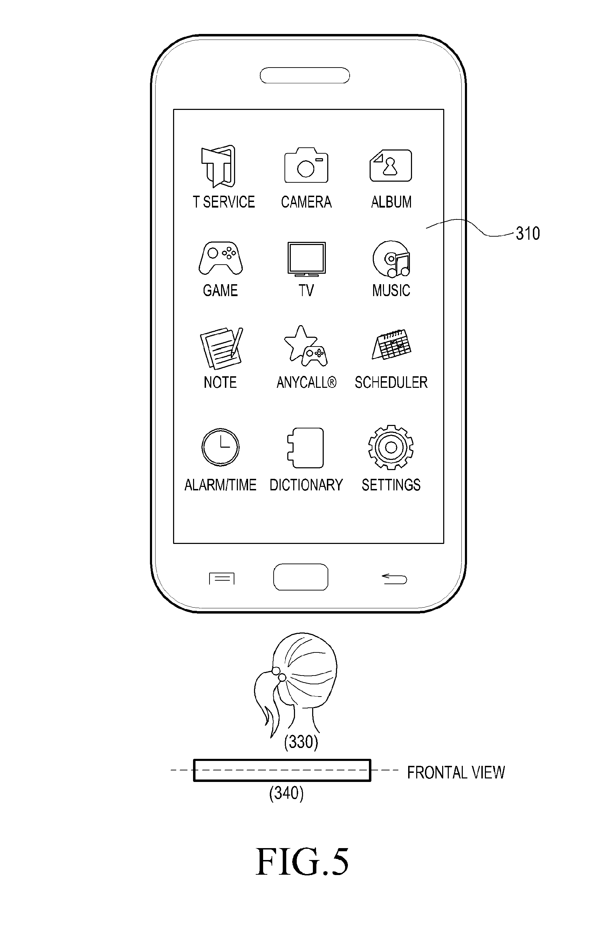

At this time, the user's motion, when base data is generated by performing face recognition from the recognition image data obtained from capturing the user's face 330 (see FIGs. 5 to 7) from the frontal view with respect to the digital device, may be up, down, left, or right movement based on the base data, and the controller 90 controls to display a menu on the at least one face corresponding to the direction of one of the up, down, left and right movements based on the extent of the movement and the direction. The controller 90 controls to display the 3D GUI to be slanted toward the direction of the movement in order to display the menu on the at least one face corresponding to the direction of one of the up, down, left and right movements.

An angle at which the 3D GUI leans is proportional to the extent of the movement of the face, i.e., the rotation angle of the face. Thus, the controller 90 may give an effect as if the 3D GUI physically leans.

When a starting event indicating the initiation of the vision recognition GUI mode occurs, the vision recognition processor 60 generates base data by performing face recognition from the recognition image data in which the face is captured from a frontal view, and then, based on the base data, according to a direction of the detected face movement, the controller 90 controls to display a menu on at least one of the up, down, left and right faces that corresponds to the direction of the face movement.

The starting event may occur when there is, for example, a direct user's input, message reception, or an alarm related to particular information.

In the vision recognition GUI mode, the controller 90 controls the vision recognition processor 60 to generate the base data by performing the face recognition from the recognition image data in which the face is captured from a frontal view. The base data contains information of a face based on which the extent or direction of a movement is estimated. In this regard, the recognition image data having the face captured from the frontal view is required for obtaining the base data, and thus the controller 90 may make an alarm, guiding the user's manipulation to have his/her face captured in the frontal view. For example, the controller 90 may turn on a lamp indicating when the face of the user is located on a proper spot from the image sensor 30. In this case, the display unit 120 may keep displaying the 2D GUI on the screen.

The display unit 120 may also display a guide frame to guide the location of the face to be captured together with an image being captured on the screen. The guide frame may be configured to have an indicator to indicate general positions of the eyes, nose, and mouth within a rectangular outer frame.

When detecting a movement of the face, i.e., the head's movement, to one of up, down, left, and right directions based on the base data, the controller 90 controls to display a menu of a corresponding face of the top, bottom, left, and right faces according to the movement direction. The movement of the face is caught by using tracking recognition image data captured since the base data has been generated. For example, a motion vector is detected based on a change in position by comparing a position of the eyes obtained from the tracking recognition image data with a position of the eyes obtained from the base data. Using the motion vector, the controller 90 detects the direction or angle of the movement of the face. The motion vector may also be detected by using a position of the nose or mouth.

Upon detection of the face movement to the up direction based on the base data when user raises his/her head, the controller 90 controls to display a menu of the top face of the rectangular parallelepiped. Upon detection of the face movement to the down direction based on the base data when user drops his/her head, the controller 90 controls to display a menu of the bottom face of the rectangular parallelepiped. Upon detection of the face movement to the left direction based on the base data when user turns his/her head in the left direction, the controller 90 controls to display a menu of the left face of the rectangular parallelepiped. Upon detection of the face movement to the right direction based on the base data when user turns his/her head in the right direction, the controller 90 controls to display a menu of the right face of the rectangular parallelepiped.

In addition, when the face moves in one of the up, down, left, and right directions based on the base data and then moves to another direction except for the direction consistent with the base data, the controller 90 controls to display a menu of a face corresponding to the direction.

Specifically, the controller 90 recognizes when the user turns his/her face to the left and then raises his/her head, and controls to display menus of the left and top faces. Also, the controller 90 recognizes when the user turns his/her face to the left and then drops his/her head, and controls to display menus of the left and bottom faces. In addition, the controller 90 recognizes when the user turns his/her face to the right and then raises his/her head, and controls to display menus of the right and top faces. Furthermore, the controller 90 recognizes when the user turns his/her face to the right and then drops his/her head, and controls to display menus of the right and bottom faces.

As such, the digital device displays the 3D GUI in which menus are displayed on base and side faces of a rectangular parallelepiped, and recognizing a direction of the face movement, controls the display of the 3D GUI. Thus, even with the user moving his/her head, the digital device may display new menus based on the movement, thereby providing complex menus to the user in easier way.

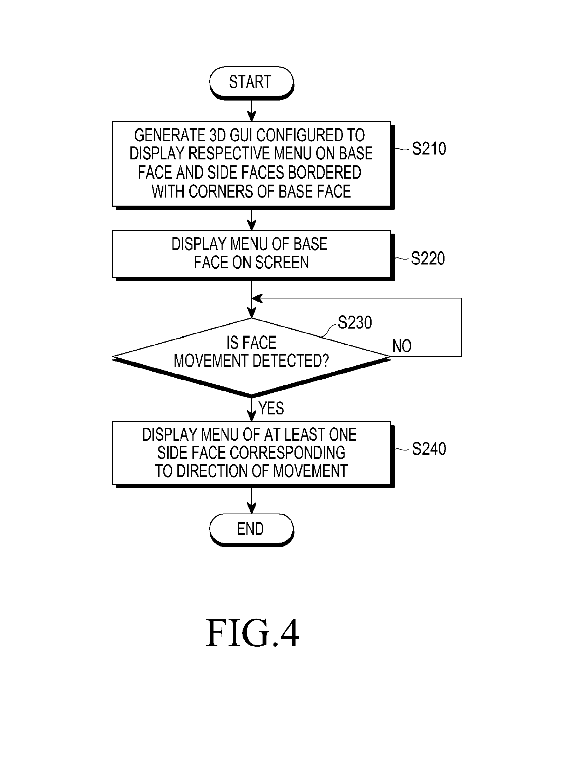

FIG. 4 is a flowchart of a method of providing the 3D GUI, according to an embodiment of the present invention.

Referring to FIG. 4, in the vision recognition GUI mode, the controller 90 generates the 3D GUI in which each menu is displayed on each of the base face and side faces bordered with corners of the base face, in step 5201. Specifically, the digital device generates the 3D GUI implemented by using 5 faces of a rectangular parallelepiped. The 3D GUI is configured to look like the rectangular parallelepiped having a base face and top, bottom, left and right faces bordered with four corners of the base face. The base face is a floor face of a rectangular parallelepiped having the same size as the screen size of the display unit 120.

The base face is an area in which a GUI menu of a general GUI mode, rather than the vision recognition GUI mode, is displayed. On the respective faces, i.e., top, bottom, left and right faces of the rectangular parallelepiped, top menus or sub-menus of the menu displayed on the base face may be displayed, or shortcut icons for functions provided by the digital device may be displayed. The controller 90 also displays the menu of the base face on the screen, in step S220. With the menu of the base face being displayed, upon recognition of a movement of the user's face 330 in step S230, the controller 90 displays a menu or data of at least one side face corresponding to the direction of the movement of the user's face, in step S240. The controller 90 controls to display the 3D GUI to be slanted toward the direction of the movement in order to display the menu of the at least one side face corresponding to the direction of one of the up, down, left and right movements.

Here, the angle at which the 3D GUI leans is proportional to the movement angle of the face. Thus, the controller 90 may give an effect as if the 3D GUI physically leans.

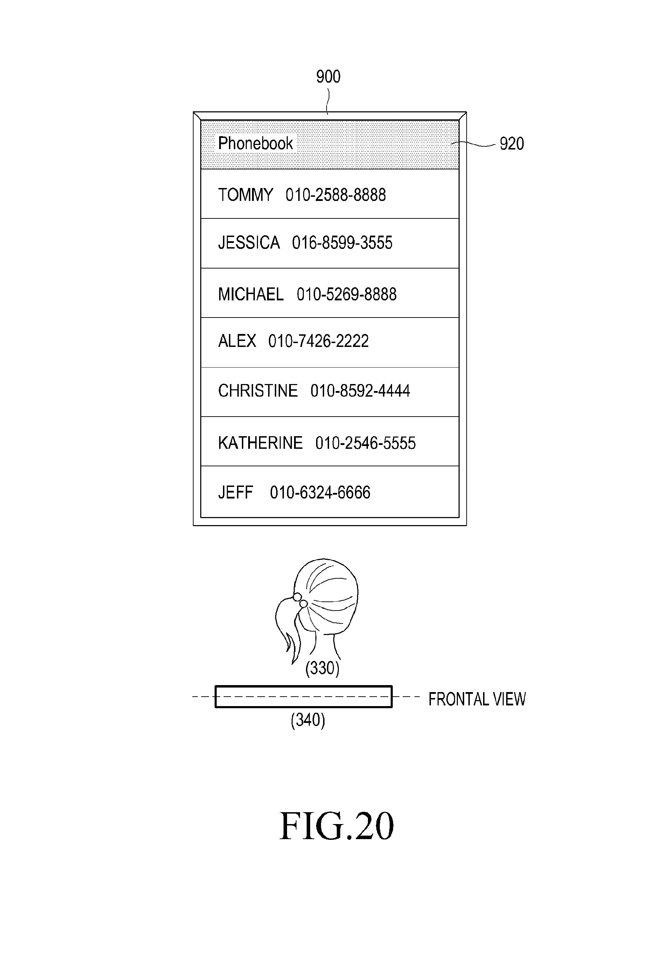

The 3D GUIs to be displayed on the screen of the digital device will now be described in detail with reference to FIGS. 5 to 20. FIGS. 5 to 7 show a procedure of displaying a left side menu, according to an embodiment of the present invention.

FIG. 5 shows a screen where a base face 310 of the 3D GUI is displayed. Referring to FIG. 5, on the base face 310 of the 3D GUI, a general 2D GUI screen image is displayed by the controller 90. In other words, FIG. 5 shows a display screen when there is no detection of a movement of the user's face 330 after the base data is generated through recognition of the user's face 330 captured from the frontal view. In FIG. 5, the user's face 330 faces toward the screen of the digital device. A bar 340 below the user's face 330 is shown to more easily indicate the rotational direction and angle of the user's face 330.

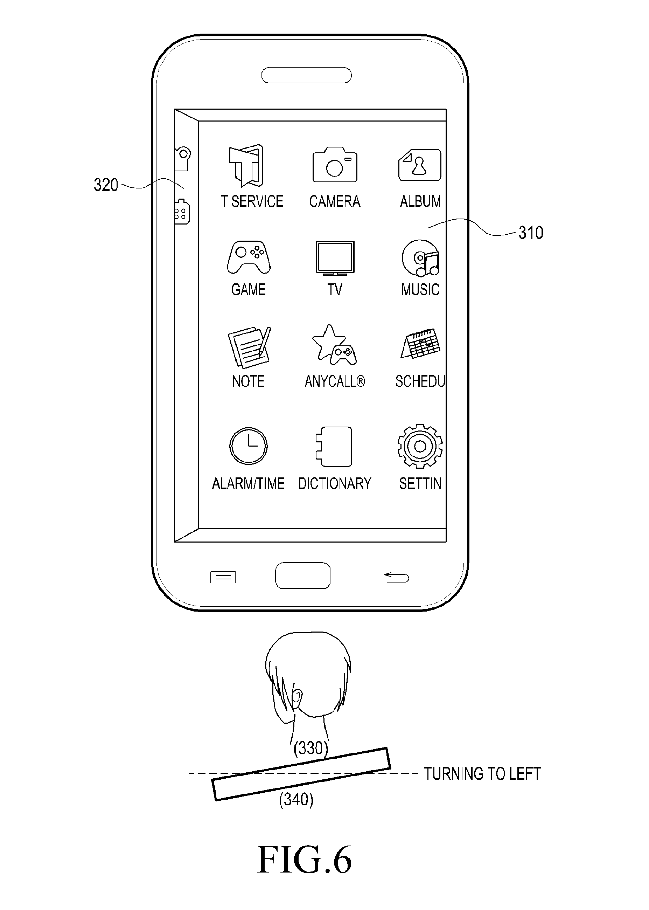

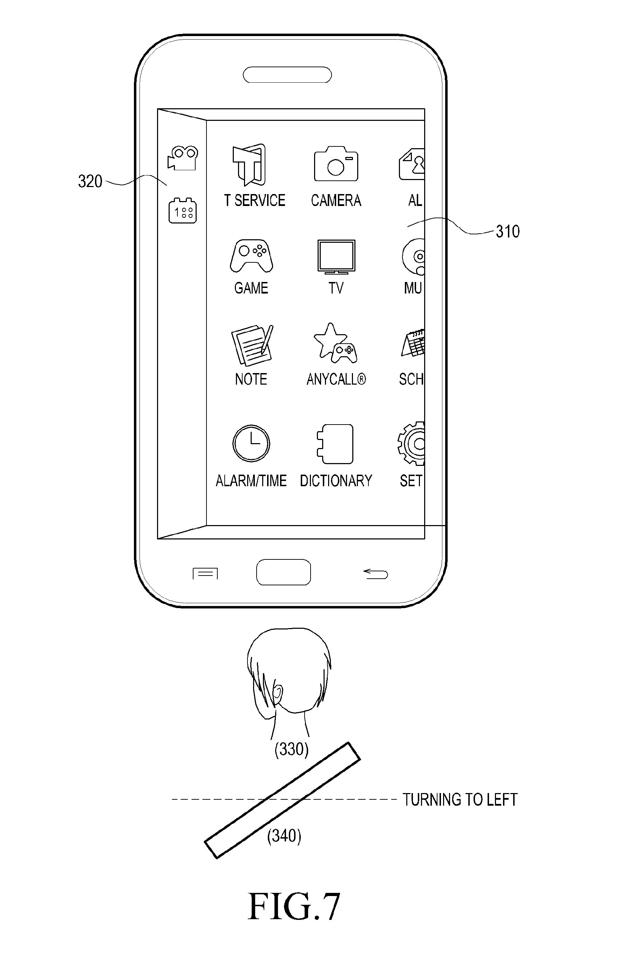

FIG. 6 shows a display screen resulting from recognition of the user's face 330 turning to the left, performed by the vision recognition processor 60. As shown in FIG. 6, when the user turns his/her face to the left, the left face 320 of the 3D GUI is displayed. FIG. 7 shows a display screen when the user turns his/her face 330 to the left to an extent that the entire left face of the 3D GUI is displayed. Compared with the rotation angle indicated by the bar 340 shown in FIG. 6, the rotation angle of the face in FIG. 7 is shown to be larger.

In this way, upon recognition of a movement of the user's face 330, the controller 90 displays a face of the rectangular parallelepiped corresponding to the direction of the movement.

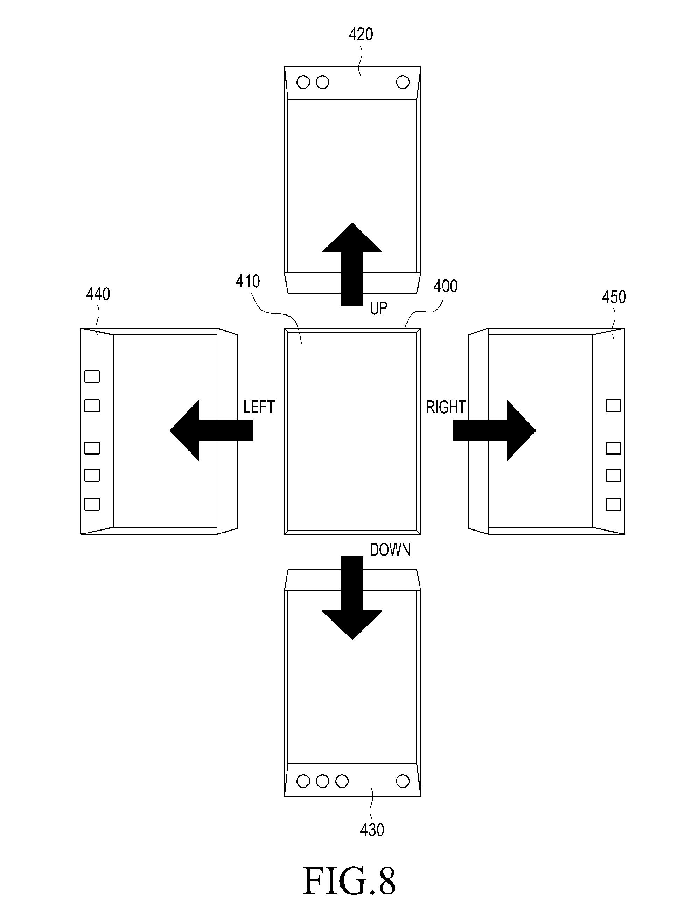

FIG. 8 is a structure of a 3D GUI 400, according to an embodiment of the present invention. Referring to FIG. 8, the 3D GUI 400 consists of 5 faces of the rectangular parallelepiped. With the base face 410 of the 3D GUI 400 being displayed, when the 3D GUI 400 leans upward, the top face 420 is displayed. With the base face 410 of the 3D GUI 400 being displayed, when the 3D GUI 400 leans downward, the bottom face 430 is displayed. With the base face 410 of the 3D GUI 400 being displayed, when the 3D GUI 400 leans to the left, the left face 440 is displayed. With the base face 410 of the 3D GUI 400 being displayed, when the 3D GUI 400 leans to the right, the right face 450 is displayed. The direction to which the 3D GUI 400 leans corresponds to the direction of a movement of the user's face 330.

As such, the display unit 120 displays the 3D GUI having 5 faces of the rectangular parallelepiped on the screen.

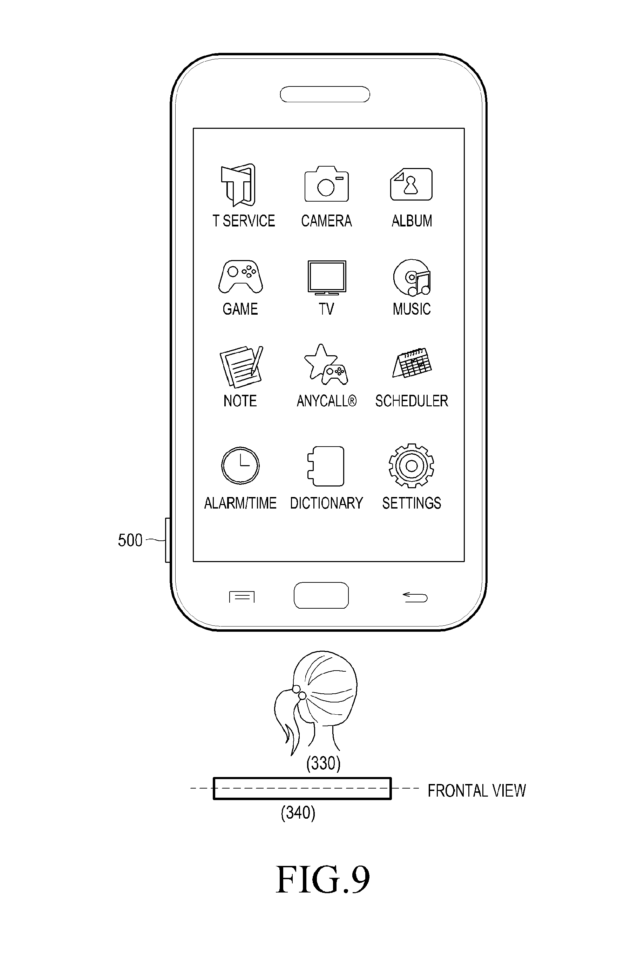

FIG. 9 shows a cell phone having a vision recognition GUI mode start button 500, according to an embodiment of the present invention. Referring to FIG. 9, when the user presses the vision recognition GUI start button 500, the controller 90 processes, with the vision recognition processor 60, the vision recognition image data in which the user's face 330 is captured from the frontal view, generates the base data, and starts detecting the movement of the user's face 330 based on the base data.

Although the vision recognition GUI mode start button 500 is shown in FIG. 9, it will be readily appreciated that the controller 90 may recognize the motion initiation in other ways of manipulation.

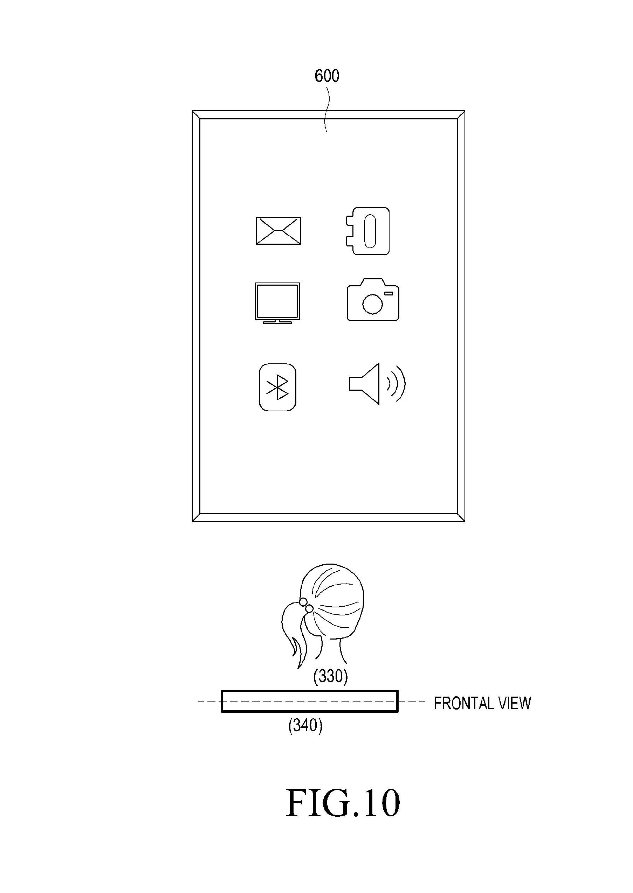

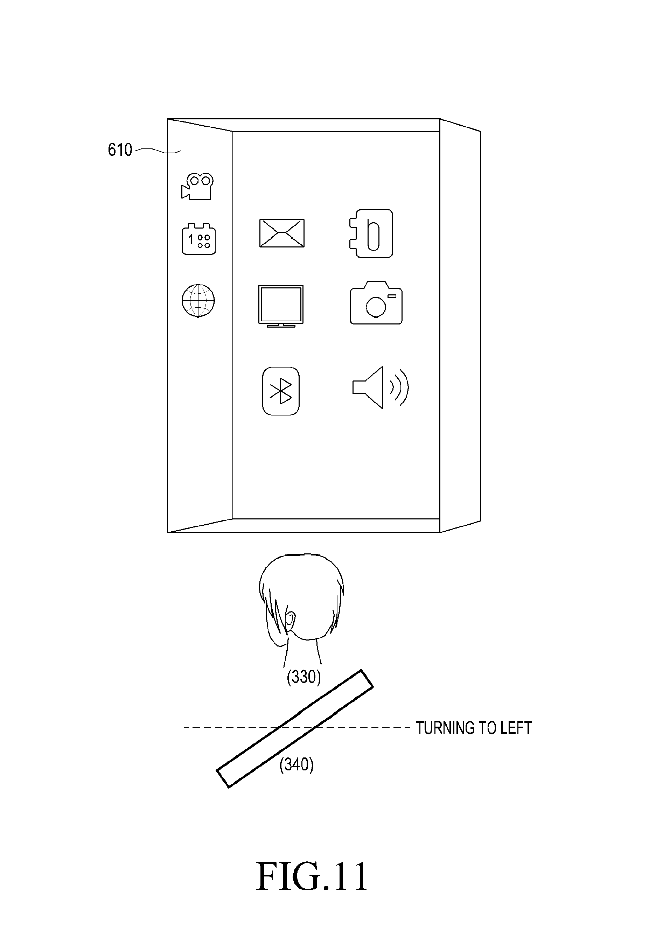

FIGS. 10 to 12 are diagrams of base, left, and both left and top faces' menus, according to an embodiment of the present invention. FIG. 10 shows a menu displayed on the base face with the user's face 330 from the frontal view. In this state, upon detection of the user's face 330 turning to the left, the controller 90 controls the GUI generator 130 to display a menu of the left face 610, as shown in FIG. 11. In this state, upon detection of the user's face 330 being raised up in the vision recognition processor 60, the controller 90 displays the menu of the left face 610 together with a menu of the top face 620. In this way, upon recognition of continuous movements of the user's face 330, the controller 90 displays both menus of two faces.

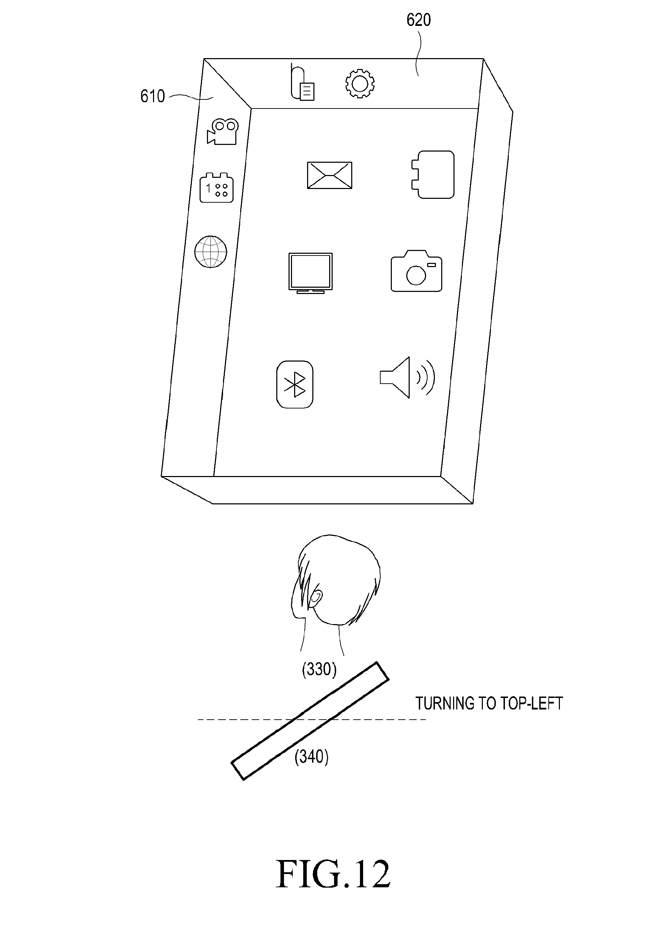

The screen of FIG. 12 is displayed when the user raises his/her face up and then turns to the left, or moves his/her face in the diagonal direction (e.g., 11 o'clock direction).

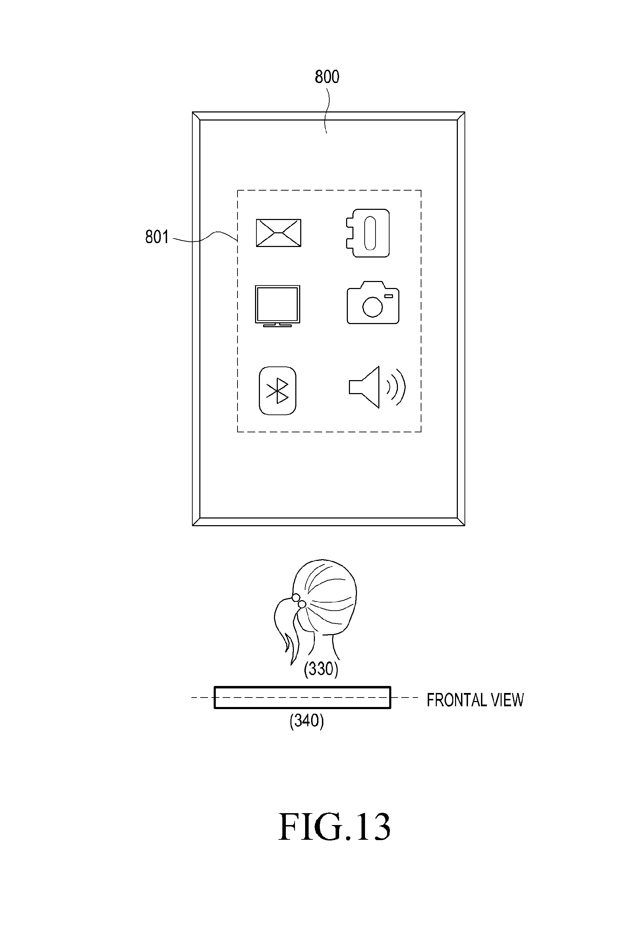

FIGS. 13 to 16 show a procedure of selecting an item displayed on a base face, which is performed by a user, according to an embodiment of the present invention.

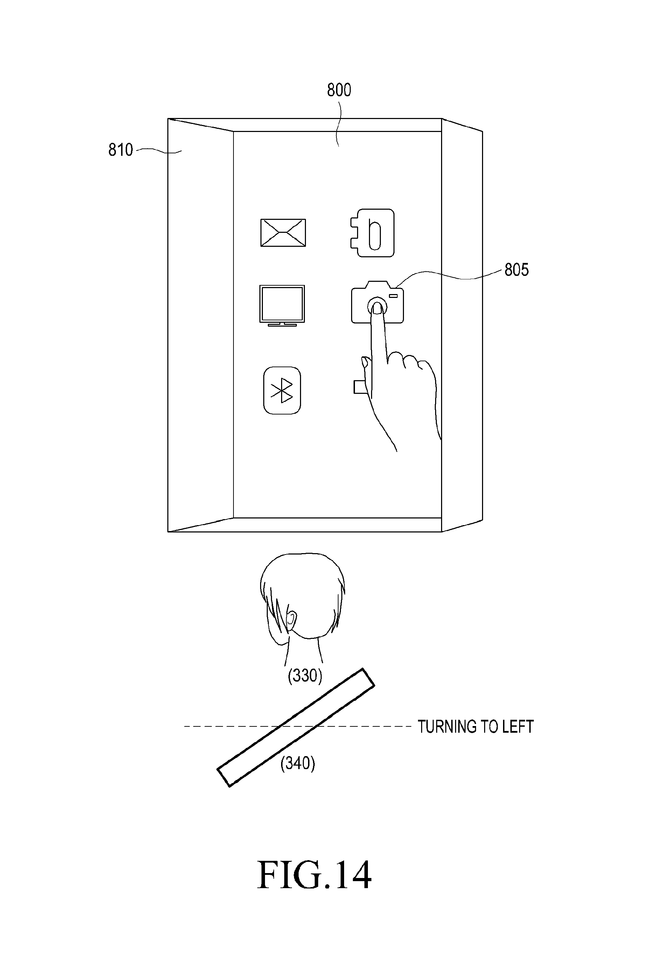

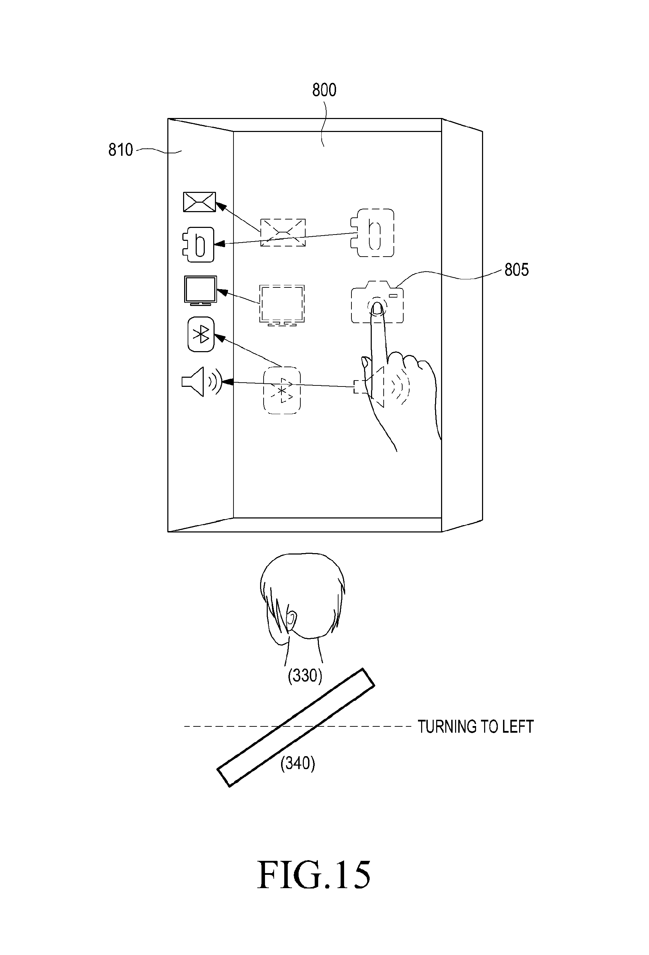

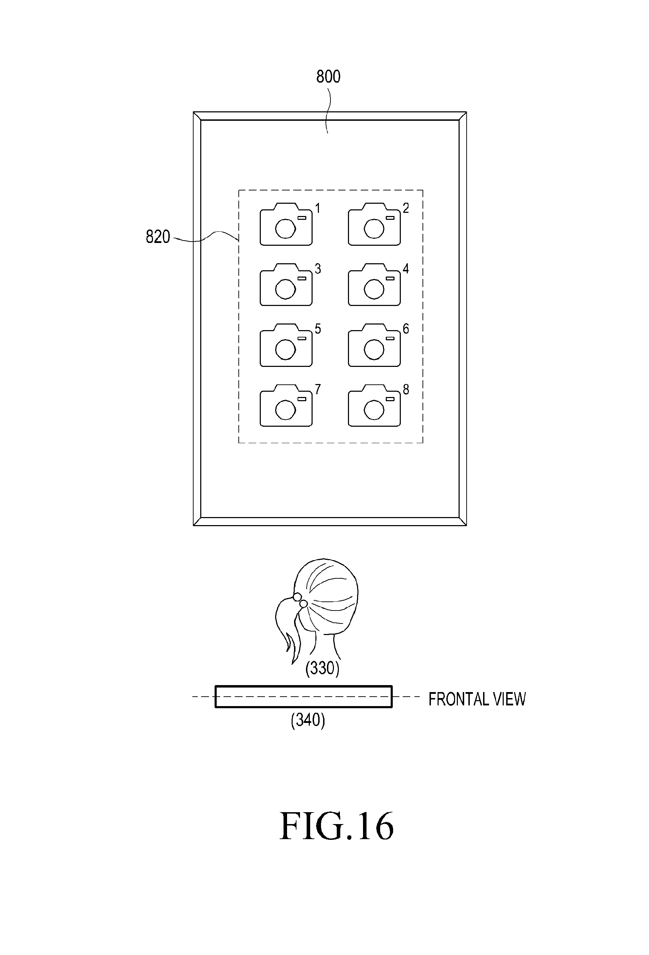

FIG. 13 shows a screen of the display unit 120, in which icons of a main menu are displayed on the base face 800. In this state, when the user turns his/her face 330 to the left, the controller 90 detects the movement to the left direction through the vision recognition processor 60, and displays the left face 810 of the 3D GUI on the screen, as shown in FIG. 14. In this state, when the user selects a particular menu icon, e.g., a camera icon 805, icons other than the selected camera icon 805 are moved onto the left face 810, as shown in FIG. 15. After that, as shown in FIG. 16, the controller 90 displays icons 820 of a sub-menu of the camera icon on the base face 800. Through this procedure, the controller 90 displays the sub-menu of the icon selected by the user on the base face 800 while displaying icons other than the selected icon on the left face 810.

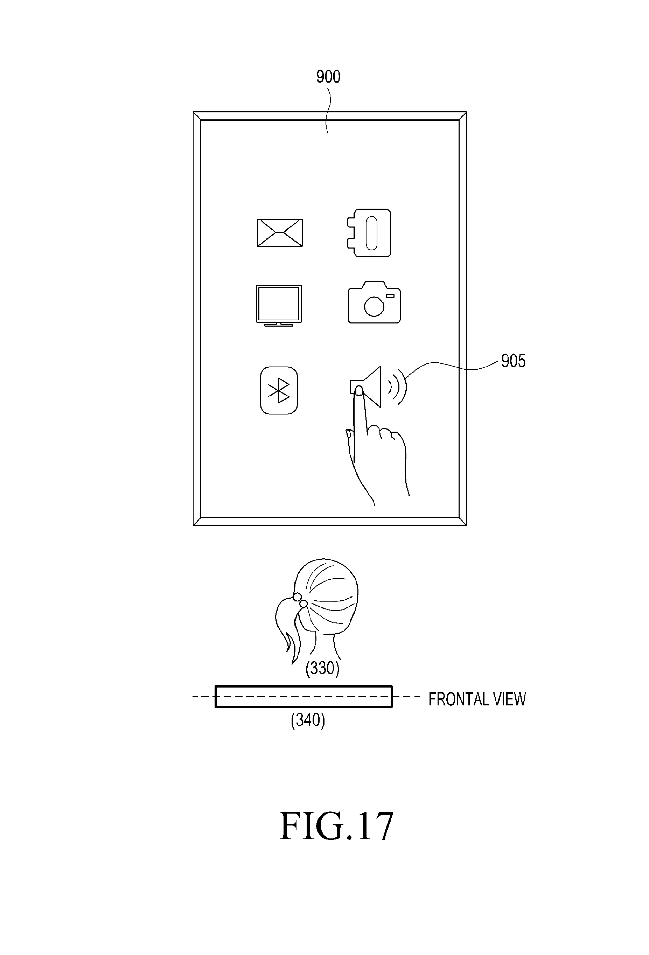

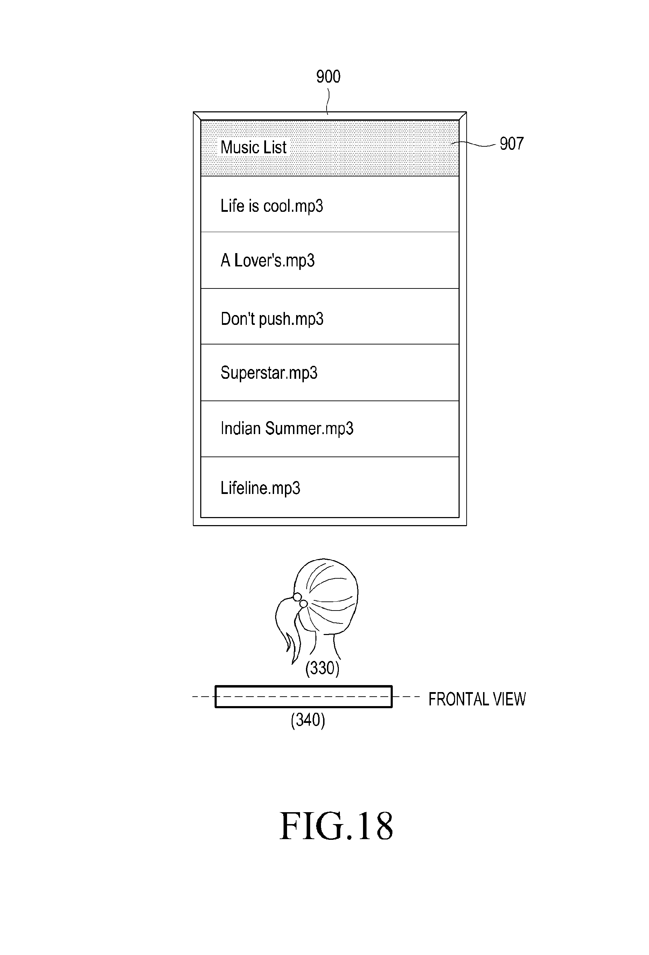

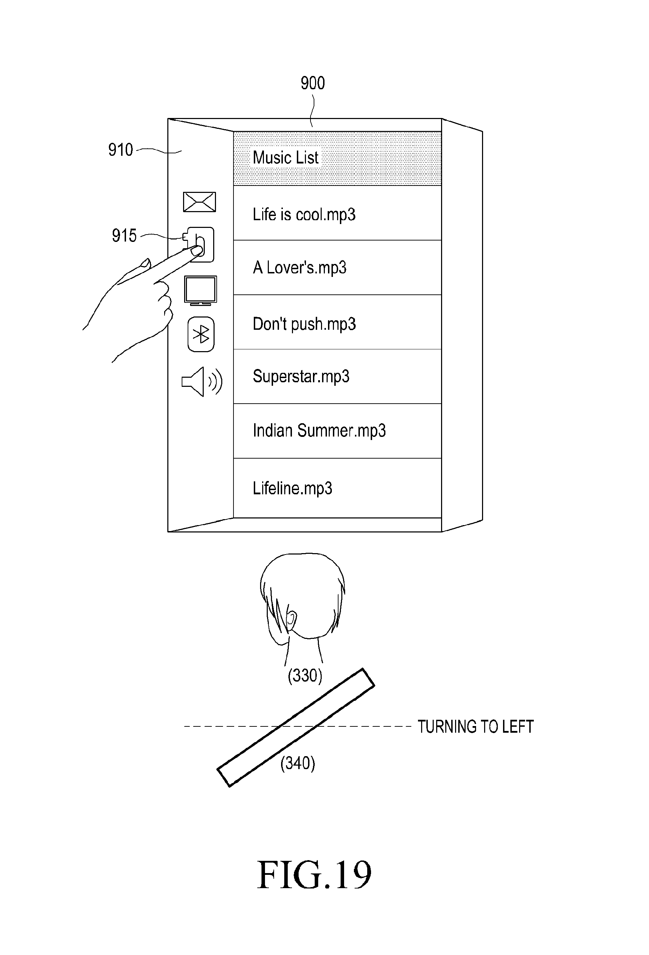

FIGS. 17 to 20 show a procedure of selecting an item of a menu displayed on the left face 910, according to an embodiment of the present invention. FIG. 17 shows a main menu of the base face 900 of the 3D GUI displayed on the screen by the controller 90. Referring to FIG. 17, when the user selects a music icon 905, the controller 90 displays a music list on the base face 900, as shown in FIG. 18. In this state, when the user turns his/her face 330 to the left, the controller 90 detects the movement to the left direction through the vision recognition processor 60, and displays the left face 910 of the 3D GUI on the screen, as shown in FIG. 19. On the left face 910, there are icons of a main menu, which is a top menu, displayed.

In this state, if the user selects a phone book icon 915 on the left face, as shown in FIG. 19, the controller 90 displays a list of phone numbers 920, which is a sub-menu of the phone book icon 915, on the base face 900.

As such, the controller 90 may display on the left face 910 a top menu of a menu displayed on the current base face 900. The user may easily find the top menu by turning his/her head to the left.

With other faces, i.e., at least one of top, bottom, left and right faces being displayed with the base face 900, when a message is received from an outside or a notification message regarding a function or application of the digital device is generated, any one of side faces currently being displayed has the content of the message displayed for a certain period of time. Referring to FIG. 19, when the message is received or the notification message is generated, the content of the message is displayed for a predetermined period of time instead of some of the top menu. After the predetermined period of time, some of the top menu is displayed back. During the display of the content of the message, if the user touches and selects an area in which the content of the message is displayed, an associated application may be executed and a related screen may be displayed on the base face 900.

In another embodiment of the present invention, a specific application may be assigned to a direction of the movement of the user's face 330, and when at least one of the four side faces is displayed, a screen to be shown when the specific application is activated may be displayed on the corresponding side face. Otherwise, the menu of the specific application assigned to the direction of the movement of the user's face 330 may be displayed when at least one of the four side faces are displayed.

In yet another embodiment, by placing a function like music play on the side face corresponding to the direction of the movement, a screen for controlling simple menus like forward, reward, stop and play menus may be shown.

According to the various embodiments of the present invention, when the 3D GUI displays menus on at least one side face at an input of a user's manipulation over the base face currently being displayed, the at least one side face corresponding to a direction of the manipulation may be implemented, thereby providing the user with a desirable easy-to-use menu.

While several embodiments have been described, it will be understood that various modifications can be made without departing the scope of the present invention. Thus, it will be apparent to those of ordinary skill in the art that the invention is not limited to the embodiments described, but can encompass not only the appended claims but their equivalents.

## Claims

1. A method of providing a Graphical User Interface (GUI) in a digital device, the method comprising:
generating a three-dimensional (3D) GUI configured to display respective menus on a base face and at least one side face bordering the base face;
displaying a menu of the base face on a screen of a display unit; and
upon detection of a user's movement through vision recognition with the menu of the base face being displayed, displaying at least one face that corresponds to a direction of the user's movement, and displaying data on the at least one face.

2. The method of claim 1, wherein the base face is a face of a rectangular parallelepiped, and wherein the at least one face is one of top, bottom, left, and right faces bordering four corners of the base face.

3. The method of claim 2, wherein the screen of the menu of the base face is generated based on base data obtained from recognizes recognition image data obtained by capturing the user's face from a frontal view,
wherein the user's movement is detected according to a movement of the user's face based on the base data, and
wherein displaying the data on the at least one face comprises, displaying a menu of the at least one face that corresponds to the direction of the movement among the top, bottom, left, and right faces, according to the direction of the movement of the user's face.

4. The method of claim 3, wherein displaying the data on the at least one face comprises,
displaying the 3D GUI to be slanted toward the direction of the movement to display the menu of the at least one face corresponding to the direction of the movement among the top, bottom, left, and right faces.

5. The method of claim 4, wherein an angle at which the 3D GUI is slanted is proportional to an angle at which the user's face moves.

6. The method of claim 1, wherein the at least one of the side faces displays one of a top menu or a sub-menu of the menu displayed on the base face, shortcut icons for functions provided by the digital device, a message received at the digital device from an outside source or a notification message for an application installed in the digital device, and a control menu related to music file execution control.

7. The method of claim 2, wherein each of the at least one of the side faces is assigned a different application, and depending on the direction of the movement of the user's face, a screen to be shown when an application is activated is displayed on the at least one face that corresponds to the direction of the movement.

8. An apparatus for providing a Graphical User Interface (GUI) of a digital device, the apparatus comprising:
a display unit;
a vision recognition processor for detecting a user movement from vision recognition data captured with an image sensor;
a GUI generator for generating a three-dimensional (3D) GUI configured to display respective menus on a base face and at least one side face bordering the base face; and
a controller for displaying a menu of the base face on a screen of the display unit, and upon detection of a user's movement through the vision recognition processor with the menu of the base face being displayed, displaying at least one face that corresponds to a direction of the user's movement and displaying data on the at least one face.

9. The apparatus of claim 8, wherein the base face is a face of a rectangular parallelepiped, and
wherein the at least one face is one of top, bottom, left, and right faces bordering four corners of the base face.

10. The apparatus of claim 8, wherein a screen of the menu of the base face is generated based on base data when the vision recognition processor recognizes recognition image data obtained by capturing the user's face from a frontal view,
wherein the vision recognition processor detects the user's movement according to a movement of the user's face based on the base data, and
wherein the controller displays a menu of the at least one face that corresponds to the direction of the movement among the top, bottom, left, and right faces, according to the direction of the movement of the user's face.

11. The apparatus of claim 10, wherein the controller displays the 3D GUI to be slanted toward the direction of the movement to display the menu of the at least one face corresponding to the direction of the movement among the top, bottom, left, and right faces.

12. The apparatus of claim 11, wherein an angle at which the 3D GUI is slanted is proportional to an angle at which the user's face moves.

13. The apparatus of claim 8, wherein the at least one of the side faces displays one of a top menu or a sub-menu of the menu displayed on the base face, shortcut icons for functions provided by the digital device, a message received by the digital device from an outside source or a notification message for an application equipped in the digital device, and a control menu related to music file execution control.

14. The apparatus of claim 9, wherein each of the at least one of the side faces is assigned a different application, and depending on the direction of the movement of the user's face, a screen to be shown when an application is activated is displayed on the at least one face that corresponds to the direction of the movement.
